# EUROPEAN PATENT SPECIFICATION

(11) **EP 2 623 889 B1**
(45) Date of publication and mention of the grant of the patent: **18.11.2020**
(21) Application number: 11828259.9
(22) Date of filing: 25.02.2011
(51) Int. Cl.: F25B 1/00, F25B 13/00

(54) **THERMAL STORAGE DEVICE AND AIR CONDITIONER PROVIDED WITH THERMAL STORAGE DEVICE**
WÄRMESPEICHERVORRICHTUNG UND MIT DIESER WÄRMESPEICHERVORRICHTUNG AUSGESTATTETE KLIMAANLAGE
DISPOSITIF D'ACCUMULATION THERMIQUE ET CLIMATISEUR COMPORTANT LE DISPOSITIF D'ACCUMULATION THERMIQUE

(30) Priority: 01.10.2010 JP 2010223758
(43) Date of publication of application: 07.08.2013
(73) Proprietor: Panasonic Corporation, Osaka 571-8501 (JP)
(72) Inventor: SUGIO, Takashi, Chuo-ku, Osaka-shi Osaka 540-6207 (JP); YAMAMOTO, Noriaki, Chuo-ku, Osaka-shi Osaka 540-6207 (JP); KAMODA, Hirokazu, Chuo-ku, Osaka-shi Osaka 540-6207 (JP); IMASAKA, Toshiyuki, Chuo-ku, Osaka-shi Osaka 540-6207 (JP); SHIMIZU, Akihiko, Chuo-ku, Osaka-shi Osaka 540-6207 (JP)
(74) Representative: Eisenführ Speiser
(86) International application number: PCT/JP2011/001091
(87) International publication number: WO 2012/042689

(56) References cited:
- JP-A- 1 075 868
- JP-A- 4 257 671
- JP-A- 4 270 876
- JP-A- 5 223 410

## Description

### Technical Field

The present invention relates to a heat storage device disposed around a compressor and accommodating a heat storage material that stores therein heat generated by the compressor and also to an air conditioner having the heat storage device.

### Background Art

A conventional heat pump air conditioner conducts defrosting during heating by switching a four-way valve from a heating cycle to a cooling cycle when frost has been formed on an outdoor heat exchanger. In this defrosting method, an indoor fan is at a stop, but cold air flows gradually out of an indoor unit, thus posing a problem of warmth being lost.

In view of this, another air conditioner has been proposed having a heat storage device mounted on a compressor in an outdoor unit for the purpose of defrosting by making use of waste heat of the compressor that has been stored in a heat storage tank during heating (see, for example, Patent Document 1).

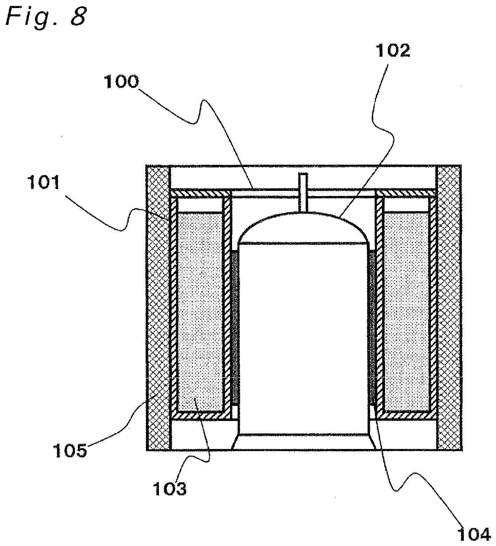

Fig. 8 is a vertical cross-sectional view of an example of a conventional heat storage device. In Fig. 8, a heat storage device 100 includes a heat storage tank 101 in the form of a container that is disposed around a compressor 102 so as to be held in contact with at least part of an outer surface thereof. A silicone filler 104 is filled in a gap between the compressor 102 and the heat storage tank 101, which is filled with a heat storage material 103 and covered with a heat insulating material 105.

### Patent Document(s)

▪ Patent Document 1: Japanese Patent No.1873598
Patent Document 2: Japanese Patent No. 4270876 A discloses a heat storage tank having the features in the preamble of claim 1.

### Summary of the Invention

### Problems to be solved by the Invention

In the heat storage device 100 as disclosed in Patent Document 1, as shown in Fig. 8, the heat storage tank101 has a constant horizontal cross-sectional area from near an upper end to near a lower end of the heat storage device 100 and no vertical distribution of the horizontal cross-sectional area is taken into consideration. However, because a low-temperature heat storage material 103 that has convected downward is present at a lower portion of the heat storage tank 101, a corresponding distribution of the horizontal cross-sectional area should be taken into consideration. If not, a problem arises that heat supplied from the compressor 102 cannot efficiently reach all parts of the heat storage material 103 within the heat storage tank 101.

The present invention has been developed to solve the problems inherent in the prior art and is intended to provide a heat storage device that can make heat generated by a compressor efficiently reach all parts of a heat storage material within a heat storage tank and also to provide an air conditioner employing such a heat storage device therein.

### Means to Solve the Problems

In accomplishing the above objective, the present invention is directed to a heat storage tank according to claim 1 and an air conditioner according to claim 6.

### Effects of the Invention

In the heat storage device of the above-described construction, heat from the compressor is stored in the heat storage material and the temperature of the heat storage material becomes higher at an upper portion of the heat storage tank than at a lower portion of the heat storage tank. In the present invention, because the bottom portion of the heat storage tank in contact with the heat storage material has a horizontal cross-sectional area smaller than that of the heat storage tank in the vicinity of the liquid surface of the heat storage material, it becomes possible to efficiently spread heat generated by the compressor throughout the heat storage material within the heat storage tank.

### Brief Description of the Drawings

Fig. 1 is a piping diagram of an air conditioner having a heat storage device according to the present invention.
Fig. 2 is a piping diagram of the air conditioner of Fig. 1, depicting operation thereof and a flow of refrigerant during normal heating.
Fig. 3 is a piping diagram of the air conditioner of Fig. 1, depicting the operation thereof and a flow of refrigerant during defrosting/heating.
Fig. 4 is a perspective view of the heat storage device according to the present invention with a compressor and an accumulator installed.
Fig. 5 is a perspective view of the heat storage device of Fig. 4.
Fig. 6 is a graph indicating a relationship between a heat-transfer coefficient of a heat-transfer side wall and a distance between a heat exchanger and the heat-transfer side wall.
Fig. 7 is a schematic cross-sectional view of a heat storage device according to another embodiment.
Fig. 8 is a schematic cross-sectional view of a conventional heat storage device.

### Embodiment(s) for Carrying out the Invention

According to a first embodiment useful for understanding the present invention there is a heat storage device disposed around a compressor to store heat generated by the compressor. The heat storage device includes a heat storage material for storing heat generated by the compressor, a heat storage tank for accommodating the heat storage material therein, and a heat storage heat exchanger accommodated in the heat storage tank. A bottom portion of the heat storage tank in contact with the heat storage material has a horizontal cross-sectional area smaller than that of the heat storage tank in the vicinity of a liquid surface of the heat storage material.

Even if a temperature distribution of the heat storage material accommodated within the heat storage tank is not uniform, this configuration allows heat generated by the compressor to efficiently spread throughout the heat storage material within the heat storage tank.

The bottom portion of the heat storage tank in contact with the heat storage material has a radial size smaller than that of the heat storage tank in the vicinity of the liquid surface of the heat storage material.

Even if the temperature distribution of the heat storage material accommodated within the heat storage tank is not uniform, this configuration allows heat generated by the compressor to efficiently spread throughout the heat storage material within the heat storage tank. Also, because a lower portion of the heat storage tank has a radial size smaller than that of an upper portion of the heat storage tank and, at the same time, a given heat-transfer area is maintained in the lower portion as in the upper portion, the former has a large heating effect particularly due to heat transfer, enabling the temperature of the heat storage material in the lower portion of the heat storage tank to increase within a short period of time and heat generated by the compressor to efficiently reach all parts of the heat storage material within the heat storage tank.

In an embodiment useful for understanding the present invention, the heat storage exchanger is provided in an upper portion of the heat storage tank. The upper portion has a horizontal cross-sectional area larger than that of the heat storage tank below the upper portion.

Even if the temperature distribution of the heat storage material accommodated within the heat storage tank is not uniform, this configuration allows heat generated by the compressor to efficiently spread throughout the heat storage material within the heat storage tank. Also, because the heat storage heat exchanger absorbs a larger amount of heat stored in a high-temperature heat storage material, defrosting can be efficiently conducted.

In an embodiment useful for understanding the present invention, at least part of the heat storage tank below the upper portion has a radial size smaller than that of the upper portion.

Even if the temperature distribution of the heat storage material accommodated within the heat storage tank is not uniform, this configuration allows heat generated by the compressor to efficiently spread throughout the heat storage material within the heat storage tank. Also, because a lower portion of the heat storage tank is smaller in cross-sectional area than an upper portion of the heat storage tank and, at the same time, a given heat-transfer area is maintained in the lower portion as in the upper portion, the former has a large heating effect particularly due to heat transfer, enabling the temperature of the heat storage material in the lower portion of the heat storage tank to increase within a short period of time and heat generated by the compressor to efficiently reach all parts of the heat storage material within the heat storage tank. In addition, because the heat storage heat exchanger absorbs a larger amount of heat stored in the high-temperature heat storage material, defrosting can be efficiently conducted.

In an embodiment useful for understanding the present invention, a side wall of the heat storage tank faces the recess portion. A part of an inner surface of the side wall which is facing the recess portion is not in contact with the heat storage heat exchanger.

This configuration does not impede an upward flow of the heat storage material created on the inner surface of the side wall of the heat storage tank confronting the compressor. Accordingly, not only can the heat-transfer coefficient at the inner surface of the side wall be enhanced, but heat generated by the compressor can be also made to efficiently reach all parts of the heat storage material within the heat storage tank.

A heat storage tank of the above-described construction may be arranged in an air conditioner including a compressor wherein the heat storage tank is disposed around the compressor.

Embodiments of the present invention are explained hereinafter with reference to the drawings, but the present invention is not limited to the embodiments.

### (Embodiment 1)

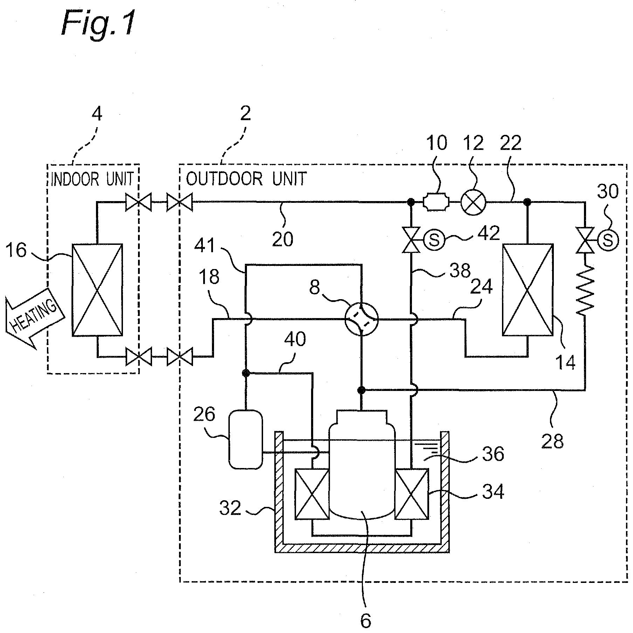

Fig. 1 depicts a piping diagram of an air conditioner having a heat storage device according to the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. Those constituent elements are connected via refrigerant piping to define a refrigeration cycle.

More specifically, the compressor 6 and the indoor heat exchanger 16 are connected to each other via a first refrigerant pipe 18 to which the four-way valve 8 is fitted, and the indoor heat exchanger 16 and the expansion valve 12 are connected to each other via a second refrigerant pipe 20 to which the strainer 10 is fitted. Also, the expansion valve 12 and the outdoor heat exchanger 14 are connected to each other via a third refrigerant pipe 22, and the outdoor heat exchanger 14 and the compressor 6 are connected to each other via a fourth refrigerant pipe 24.

The four-way valve 8 is located midway on the fourth refrigerant pipe 24, and an accumulator 26 for separating a liquid phase refrigerant and a gas phase refrigerant is provided on the fourth refrigerant pipe 24 on a refrigerant suction side of the compressor 6. The compressor 6 and the third refrigerant pipe 22 are connected to each other via a fifth refrigerant pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 for heat exchanging with the heat storage heat exchanger 34. The heat storage tank 32, the heat storage heat exchanger 34, and the heat storage material 36 constitute a heat storage device.

Also, the second refrigerant pipe 20 and the heat storage heat exchanger 34 are connected to each other via a sixth refrigerant pipe 38, and the heat storage heat exchanger 34 and the fourth refrigerant pipe 24 are connected to each other via a seventh refrigerant pipe 40. A second solenoid valve 42 is provided on the sixth refrigerant pipe 38.

The indoor unit 4 accommodates, in addition to the indoor heat exchanger 16, a fan (not shown), vertical wind direction changing blades (not shown), and horizontal wind direction changing blades (not shown). The indoor heat exchanger 16 exchanges heat between indoor air sucked into the indoor unit 4 by the fan and a refrigerant flowing through the indoor heat exchanger 16 so that air heated or cooled by the heat exchange may be blown into a room during heating or cooling, respectively. As occasion demands, the vertical wind direction changing blades vertically change the direction of air discharged from the indoor unit 4 and the horizontal wind direction changing blades horizontally change the direction of air discharged from the indoor unit 4.

The compressor 6, the fan, the vertical wind direction changing blades, the horizontal wind direction changing blades, the four-way valve 8, the expansion valve 12, the solenoid valves 30, 42, and the like are electrically connected to and controlled by a controller (for example, a microcomputer not shown).

A relation of connection and functioning of the component parts of the above-described refrigeration cycle equipment are explained hereinafter with a flow of the refrigerant, taking the case of the heating operation.

A refrigerant discharged from a discharge port in the compressor 6 passes through the four-way valve 8 and reaches the indoor heat exchanger 16 via the first refrigerant pipe 18. The refrigerant condenses in the indoor heat exchanger 16 upon heat exchange with indoor air, leaves the indoor heat exchanger 16, and passes through the second refrigerant pipe 20 and through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third refrigerant pipe 22. The refrigerant then evaporates in the outdoor heat exchanger 14 upon heat exchange with outdoor air and passes through the fourth refrigerant pipe 24, the four-way valve 8, and the accumulator 26, before the refrigerant returns to a suction port in the compressor 6.

The fifth refrigerant pipe 28 branched from the first refrigerant pipe 18 between the discharge port in the compressor 6 and the four-way valve 8 joins the third refrigerant pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed so as to encircle and contact the compressor 6 to store heat generated by the compressor 6 in the heat storage material 36. The sixth refrigerant pipe 38 branched from the second refrigerant pipe 20 between the indoor heat exchanger 16 and the strainer 10 reaches an inlet of the heat storage heat exchanger 34 via the second solenoid valve 42, and the seventh refrigerant pipe 40 extending from an outlet of the heat storage heat exchanger 34 joins the fourth refrigerant pipe 24 between the four-way valve 8 and the accumulator 26.

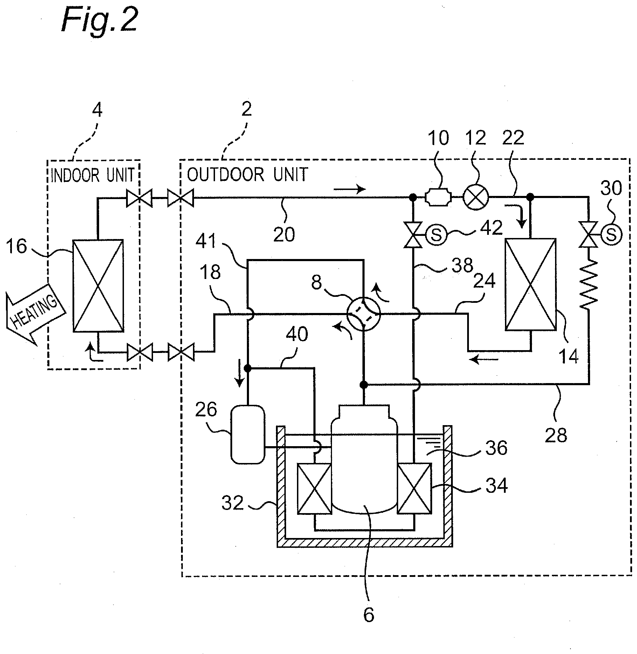

Operation of the air conditioner during normal heating is explained hereinafter with reference to Fig. 2 schematically depicting the operation of the air conditioner of Fig. 1 and a flow of the refrigerant during normal heating.

During normal heating, the first solenoid valve 30 and the second solenoid valve 42 are both closed. In this case, as described above, the refrigerant discharged from the discharge port in the compressor 6 passes through the four-way valve 8 and reaches the indoor heat exchanger 16 via the first refrigerant pipe 18. Having condensed in the indoor heat exchanger 16 upon heat exchange with indoor air, the refrigerant leaves the indoor heat exchanger 16, passes through the refrigerant pipe 20, and reaches the expansion valve 12. The refrigerant is then reduced in pressure by the expansion valve 12 and reaches the outdoor heat exchanger 14 via the third refrigerant pipe 22. Having evaporated in the outdoor heat exchanger 14 upon heat exchange with outdoor air, the refrigerant passes through the fourth refrigerant pipe 24 and through the four-way valve 8 and returns to the suction port in the compressor 6.

Heat generated by the compressor 6 is transferred from an outer wall of the compressor 6 to an outer wall of the heat storage tank 32 and stored in the heat storage material 36 accommodated in the heat storage tank 32.

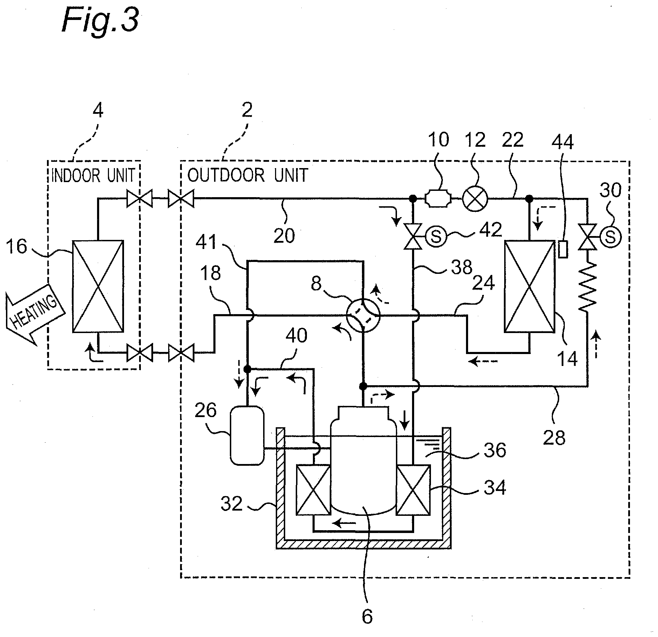

Operation of the air conditioner during defrosting/heating is next explained with reference to Fig. 3 schematically depicting the operation of the air conditioner of Fig. 1 and a flow of the refrigerant during defrosting/heating. In Fig. 3, solid arrows indicate a flow of refrigerant used for heating, and dotted arrows indicate a flow of refrigerant used for defrosting

If frost is formed and grows on the outdoor heat exchanger 14 during the above-discussed normal heating, the airflow resistance of the outdoor heat exchanger 14 increases to thereby reduce the amount of air passing therethrough, thus resulting in a reduction of the evaporating temperature in the outdoor heat exchanger 14. As shown in Fig. 3, the air conditioner according to the present invention is provided with a temperature sensor 44 for detecting a piping temperature of the outdoor heat exchanger 14, and if this temperature sensor 44 detects a reduced evaporating temperature compared with an evaporating temperature when no frost is formed, the controller outputs a command to shift the air conditioner from the normal heating operation to the defrosting/heating operation.

When the air conditioner is shifted from the normal heating operation to the defrosting/heating operation, the controller controls the first solenoid valve 30 and the second solenoid valve 42 to open them. In this case, in addition to the flow of refrigerant during the normal heating operation as discussed above, part of a gaseous refrigerant discharged from the discharge port in the compressor 6 passes through the fifth refrigerant pipe 28 and the first solenoid valve 30 and joins a refrigerant passing through the third refrigerant pipe 22 to heat the outdoor heat exchanger 14. Having condensed and turned into a liquid phase, the refrigerant passes through the fourth refrigerant pipe 24 and returns to the suction port in the compressor 6 via the four-way valve 8 and the accumulator 26.

Also, part of a liquid refrigerant diverged from the second refrigerant pipe 20 between the indoor heat exchanger 16 and the strainer 10 passes through the sixth refrigerant pipe 38 and the second solenoid valve 42 and absorbs heat from the heat storage material 36 when passing through the heat storage heat exchanger 34. The liquid refrigerant then evaporates and turns into a gas phase. The resultant gaseous refrigerant passes through the seventh refrigerant pipe 40, then joins a refrigerant passing through the fourth refrigerant pipe 24, and finally returns to the suction port in the compressor 6 via the accumulator 26. A location where the gaseous refrigerant joins may be between the accumulator 26 and the compressor 6. In this case, the refrigerant can be avoided from being absorbed by the accumulator 26 having a given thermal capacity.

Although the refrigerant returning to the accumulator 26 contains a liquid refrigerant returning from the outdoor heat exchanger 14, the latter is admixed with a gaseous high-temperature refrigerant returning from the heat storage heat exchanger 34 to thereby promote evaporation of the liquid refrigerant. Accordingly, it is not likely that a liquid refrigerant may pass through the accumulator 26 and return to the compressor 6, thus making it possible to enhance the reliability of the compressor 6.

At the initiation of defrosting/heating, the temperature of the outdoor heat exchanger 14 is below the freezing point by adhesion of frost, but when the outdoor heat exchanger 14 is heated by the gaseous refrigerant discharged from the discharge port in the compressor 6, frost adhering to the outdoor heat exchanger 14 melts in the vicinity of zero degree and the temperature of the outdoor heat exchanger 14 begins to increase upon termination of melting of the frost. When the temperature sensor 44 detects such a temperature rise of the outdoor heat exchanger 14, a determination is made that defrosting has been completed and the controller outputs a command to shift the defrosting/heating operation to the normal heating operation.

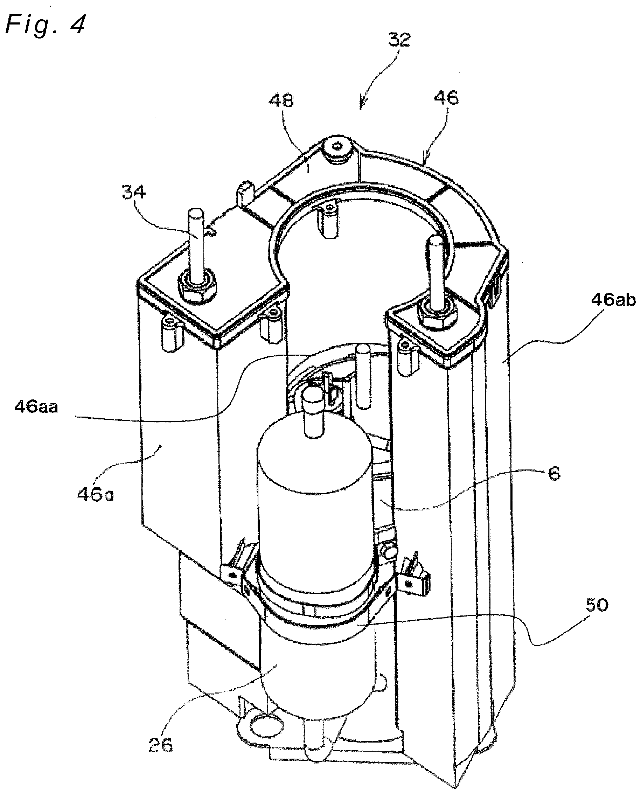

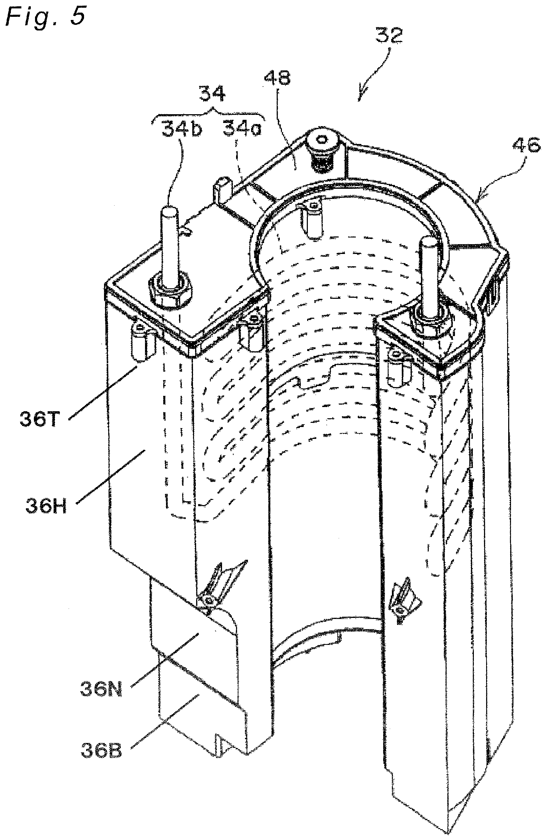

Figs. 4 and 5 depict the heat storage device, which includes the heat storage tank 32, the heat storage heat exchanger 34 and the heat storage material 36, as described above. Fig. 4 depicts a state where the compressor 6 and the accumulator 26 mounted thereto have been secured to the heat storage device. Fig. 5 is a perspective view of the heat storage device.

As shown in Fig. 4, the heat storage tank 32 includes an upwardly open tank body 46 made of a resin and having a side wall 46a and a bottom wall (not shown), a lid 48 made of a resin for closing an upper opening of the tank body 46, and a packing (not shown) made of, for example, silicone rubber and interposed between the tank body 46 and the lid 48. The lid 48 is screwed to the tank body 46. Part of the side wall 46a of the tank body 46, i.e., part of the side wall 46a confronting the compressor 6 is a heat-transfer side wall 46aa having a surface involved in heat transfer. A contact member 52 is inserted between an outer surface of the compressor 6 and the heat-transfer side wall 46aa so as to be brought into close contact with the outer surface of the compressor 6.

As shown in Fig. 5, the heat storage heat exchanger 34 is made of, for example, a copper pipe bent into a serpentine configuration and accommodated within the tank body 46. The heat storage heat exchanger 34 has opposite ends extending upwardly from the lid 48. One end of the heat storage heat exchanger 34 is connected to the sixth refrigerant pipe 38 (see Fig. 1) and the other end of the heat storage heat exchanger 34 is connected to the seventh refrigerant pipe 40 (see Fig. 1). The heat storage material 36 is filled in an internal space of the tank body 36, which is encircled by the side wall 46a, the bottom wall and the contact member 52 to accommodate the heat storage heat exchanger 34.

The heat storage device is not provided with any agitating means for agitating the heat storage material 36 filled therein, a temperature distribution of which is accordingly not uniform. In view of this, the present invention is designed to allow heat generated by the compressor 6 to efficiently reach all parts of the heat storage material 36 within the heat storage tank 32. That is, a bottom portion 36B of the heat storage tank 32 in contact with the heat storage material has a horizontal cross-sectional area smaller than that of the heat storage tank 32 in the vicinity of a liquid surface 36T of the heat storage material. Also, at least part of the heat storage tank 32 at a level where the heat storage heat exchanger 34 is not present has a horizontal cross-sectional area 36N smaller than a horizontal cross-sectional area 36H of the heat storage tank 32 at another level where the heat storage heat exchanger 34 is present.

That is, because the temperature of an inner surface of the heat-transfer side wall 46aa of the heat storage tank increases when heat is transferred from the compressor 6 to the heat storage tank 32, the heat storage material 36 heated by the inner surface of the heat-transfer side wall 46aa is reduced in density and accordingly moves up along the inner surface. On the other hand, at a location close to an inner surface of an outer side wall 46ab of the heat storage tank 32, the heat storage material 36 that has been cooled by heat dissipation to the outside moves down along this inner surface.

Such a convective circulation within the heat storage tank 32 concentrates a high-temperature heat storage material 36 in an upper portion of the heat storage tank 32 and a low-temperature heat storage material 36 in a lower portion of the heat storage tank 32. Accordingly, in the lower portion of the heat storage tank 32, a greatest temperature difference is created between the compressor 6 and the heat storage material 36, thus resulting in an efficient heat transfer. In particular, a reduction in volume of this portion allows the temperature of the heat storage material to increase within a short period of time, followed by an upward movement of the heat storage material, which in turn promotes the convective circulation, thus making it possible to allow heat to efficiently spread throughout the heat storage material within the heat storage tank 32.

Also, because the heat storage material 36 of an increased temperature moves up along the inner surface of the heat-transfer side wall 46aa and that of a side wall of the heat storage tank 32 extending above the heat-transfer side wall 46aa, the heat storage heat exchanger 34 is located a given distance away from the inner surface of the heat-transfer side wall 46aa so as not impede an upward flow of the heat storage material 36.

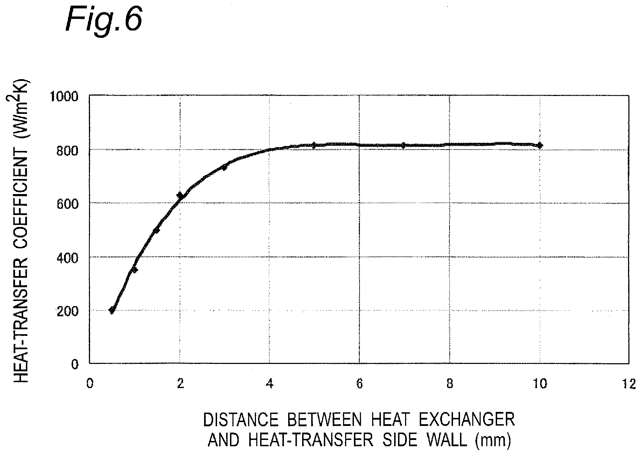

This spacing has not only an effect of promoting the convective circulation to efficiently spread heat throughout the heat storage material 36 within the heat storage tank 32, but also an effect of increasing the heat-transfer coefficient of the heat-transfer side wall 46aa as indicated in Fig. 6. According to Fig. 6, it is preferred that the heat storage heat exchanger 34 be at least 2 mm away from the inner surface of the heat-transfer side wall 46aa.

More specifically, the lower portion of the heat storage tank 32 can be considered as a heating portion where a low-temperature heat storage material 36 is mainly supplied with heat from the compressor 6 and the upper portion of the heat storage tank 32 can be considered as a narrowly-defined heat storage portion where a heat storage material 36 that has moved up upon heating is stored, and it is accordingly advantageous for the heat storage portion to have a larger volume to increase the amount of heat to be stored. Also, because the heat storage material present at the upper portion is a heat storage material that has moved up upon heating, there is less need to heat it and it may be present at a location above the compressor where no heat is transferred from the compressor. That is, in this embodiment, the heat storage tank 32 has an extended portion above an upper end of the surface 46aa involved in heat transfer from the compressor 6 and, hence, an upper end of the heat storage tank 32 is higher than the upper end of the heat-transfer side wall 46aa.

Further, the function of the heat storage heat exchanger 34 is to absorb heat from the heat storage material 36. Accordingly, it is preferable that the heat storage heat exchanger 34 be located in the narrowly-defined heat storage portion referred to above where a larger amount of heat is stored in the high-temperature heat storage material, i.e., at the upper portion (extended portion) of the heat storage tank having an increased volume.

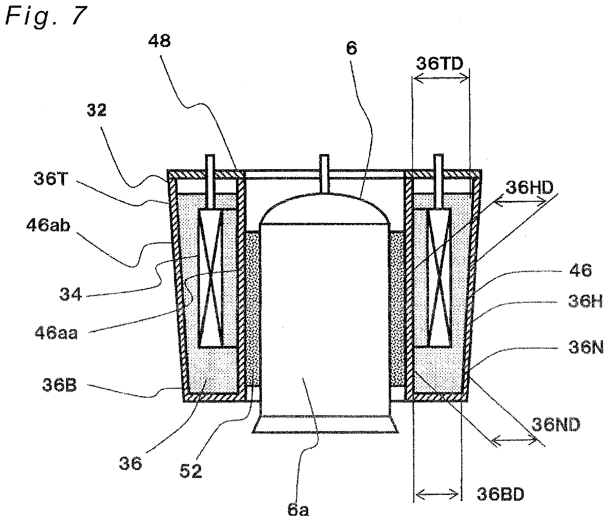

Fig. 7 schematically depicts a cross-section of the heat storage device according to another embodiment.

In Fig. 7, a heat storage tank 32 includes an upwardly open tank body 46 made of a resin and having a side wall 46a and a bottom wall (not shown) and also includes a lid 48 made of a resin for closing an upper opening of the tank body 46. The lid 48 is screwed to the tank body 46. Part of the side wall 46a of the tank body 46, i.e., part of the side wall 46a confronting the compressor 6 is a heat-transfer side wall 46aa involved in heat transfer and a contact member 52 is inserted between an outer surface of the compressor 6 and the heat-transfer side wall 46aa so as to be brought into close contact with the outer surface of the compressor 6.

A heat storage heat exchanger 34 is made of, for example, a copper pipe bent into a serpentine configuration and accommodated within the tank body 46. The heat storage heat exchanger 34 has opposite ends extending upwardly from the lid 48. One end of the heat storage heat exchanger 34 is connected to the sixth refrigerant pipe 38 (see Fig. 1) and the other end of the heat storage heat exchanger 34 is connected to the seventh refrigerant pipe 40 (see Fig. 1). A heat storage material 36 is filled in an internal space of the tank body 36, which is encircled by the side wall 46a, the bottom wall and the contact member 52 to accommodate the heat storage heat exchanger 34.

In this embodiment, a bottom portion 36B of the heat storage tank 32 in contact with the heat storage material has a radial size 36BD smaller than a radial size 36TD of the heat storage tank 32 in the vicinity of a liquid surface 36T of the heat storage material in order to allow heat generated by the compressor 6 to efficiently reach all parts of the heat storage material 36 within the heat storage tank 32. Also, at least part of the heat storage tank 32 at a level 36N where the heat storage heat exchanger 34 is not present has a radial size 36ND smaller than a radial size 36HD of the heat storage tank 32 at another level 36H where the heat storage heat exchanger 34 is present.

In the above-described construction, a lower portion of the heat storage tank 32 corresponding to the aforementioned heating portion has a horizontal cross-sectional area smaller than that of an upper portion of the heat storage tank 32 and, at the same time, a given heat-transfer area is maintained in the lower portion as in the upper portion. Accordingly, the lower portion of the heat storage tank 32 has a large heating effect particularly due to heat transfer, enabling the temperature of the heat storage material in the lower portion of the heat storage tank to increase within a short period of time and heat generated by the compressor to efficiently reach all parts of the heat storage material within the heat storage tank.

As described above, the bottom portion of the heat storage tank 32 may have a reduced horizontal cross-sectional area below a stepped portion, as shown in Fig. 5, or the heat storage tank 32 may have an inclined outer side wall 46ab so as to have a reducing horizontal cross-sectional area toward the bottom portion, as shown in Fig. 7.

Although in this embodiment the heat storage device is detachably mounted to the compressor 6, both of an outer shell of the compressor 6 and the tank body 46 may be made of a metal and joined together by welding or other method. Such a fixed mount type heat storage tank can be also designed in the above-described manner.

Also, although in this embodiment the heat storage heat exchanger 34 has been described as being accommodated within the heat storage tank 32, a heat storage heat exchanger wound directly around an outer surface of the compressor 6 may be designed in the same manner as in this embodiment.

### Industrial Applicability

Because the position of the heat storage heat exchanger within the heat storage tank is appropriately determined in view of efficient heat exchange, the heat storage device according to the present invention is effectively applicable to air conditioners, refrigerators, water heaters, heat pump washing machines, and the like.

### Explanation of reference numerals

2 outdoor unit, 4 indoor unit, 6 compressor,
8 four-way valve, 10 strainer, 12 expansion valve,
14 outdoor heat exchanger, 16 indoor heat exchanger,
18 first refrigerant pipe, 20 second refrigerant pipe,
22 third refrigerant pipe, 24 fourth refrigerant pipe, 26 accumulator,
28 fifth refrigerant pipe, 30 first solenoid valve, 32 heat storage tank,
34 heat storage heat exchanger, 34a bent portion, 34b straight portion,
36 heat storage material,
36B bottom portion of heat storage tank where heat storage material is present,
36T neighborhood of liquid surface of heat storage material,
36N level where heat storage heat exchanger is not present,
36H level where heat storage heat exchanger is present,
36BD radial size of bottom portion of heat storage tank in contact with heat storage material,
36TD radial size of heat storage tank near liquid surface of heat storage material,
36ND radial size of heat storage tank at level where heat storage heat exchanger is not present,
36HD radial size of heat storage tank at level where heat storage heat exchanger is present,
38 sixth refrigerant pipe, 40 seventh refrigerant pipe,
42 second solenoid valve, 44 temperature sensor,
46 heat storage tank body, 46a side wall, 46aa heat-transfer side wall,
46ab outer side wall, 48 lid, 50 belt, 52 contact member,
100 heat storage device, 101 heat storage tank, 102 compressor,
103 heat storage material, 104 silicone filler, 105 heat insulating material.

## Claims

1. A heat storage tank (32) adapted to be disposable around a compressor (6) comprising:
an upwardly open tank body (46) made of a resin and having a side wall (46a) and a bottom wall, wherein a part of the side wall (46a) being adapted for confronting the compressor (6) is a heat-transfer side wall (46aa) having a surface involved in heat transfer,
a lid (48) made of a resin for closing an upper opening of the upwardly open tank body (46),
a packing interposed between the upwardly open tank body (46) and the lid (48),
a heat storage material (36) filled in an internal space of the upwardly open tank body (46) encircled by the side wall (46a) and a contact member (52), such that the contact member (52) is inserted between an outer surface of the compressor (6) and the heat-transfer side wall (46aa), and
a heat storage heat exchanger (34),
**characterized in that** the heat storage tank (32) has a bottom portion (36B) in contact with the heat storage material (36), the bottom portion (36B) having a horizontal cross-sectional area smaller than that of the heat storage tank (32) in the vicinity of a liquid surface (36T) of the heat storage material (36), wherein at least a part of the heat storage tank (32) at a first level where the heat storage heat exchanger (34) is not present has a horizontal cross-sectional area (36N) smaller than a horizontal cross-sectional area (36H) of the heat storage tank (32) at a second level where the heat storage heat exchanger (34) is present.

2. The heat storage tank (32) according to claim 1, wherein the lid (48) is screwed to the upwardly open tank body (46).

3. The heat storage tank (32) according to any of claims 1 to 2, wherein the the heat storage heat exchanger (34) is made of a copper pipe bent into a serpentine configuration and accommodated within the upwardly open tank body (46).

4. The heat storage tank (32) according to claim 3, wherein the heat storage heat exchanger (34) has opposite ends extending upwardly from the lid (48).

5. The heat storage tank (32) according to claim 4, wherein a first end of the opposite ends of the heat storage heat exchanger (34) is adapted for connecting to a sixth refrigerant pipe (38) of an air conditioner, and a second end of the opposite ends of the heat storage heat exchanger (34) is adapted for connecting to a seventh refrigerant pipe (40) of the air conditioner.

6. An air conditioner comprising a compressor (6) and a heat storage tank (32) according to any of claims 1 to 5, wherein the compressor (6) is disposed in a recess portion of the heat storage tank (32).

## Patentansprüche

1. Wärmespeichertank (32), der so ausgebildet ist, dass er um einen Verdichter (6) herum angeordnet werden kann, enthaltend:
einen nach oben offenen Tankkörper (46), der aus einem Harz gefertigt ist und eine Seitenwand (46a) und eine Bodenwand aufweist, wobei ein Teil der Seitenwand (46a), der so ausgebildet ist, dass er dem Verdichter (6) gegenüberliegt, eine wärmeübertragende Seitenwand (46aa) mit einer an der Wärmeübertragung beteiligten Fläche ist,
einen aus einem Harz gefertigten Deckel (48) zum Verschließen einer oberen Öffnung des nach oben offenen Tankkörpers (46),
eine Dichtung, die zwischen dem nach oben offenen Tankkörper (46) und dem Deckel (48) angeordnet ist,
ein Wärmespeichermaterial (36), das in einen Innenraum des nach oben offenen Tankkörpers (46) gefüllt ist, der von der Seitenwand (46a) und einem Kontaktelement (52) umgeben ist, so dass das Kontaktelement (52) zwischen einer Außenoberfläche des Verdichters (6) und der wärmeübertragenden Seitenwand (46aa) eingefügt ist, und
einen Wärmespeicherwärmetauscher (34),
**dadurch gekennzeichnet, dass** der Wärmespeichertank (32) einen Bodenabschnitt (36B) in Kontakt mit dem Wärmespeichermaterial (36) aufweist, wobei der Bodenabschnitt (36B) eine horizontale Querschnittsfläche aufweist, die kleiner als diejenige des Wärmespeichertanks (32) in der Nähe einer Flüssigkeitsoberfläche (36T) des Wärmespeichermaterials (36) ist, wobei wenigstens ein Teil des Wärmespeichertanks (32) auf einem ersten Niveau, wo der Wärmespeicherwärmetauscher (34) nicht vorgesehen ist, eine horizontale Querschnittsfläche (36N) aufweist, die kleiner ist als eine horizontale Querschnittsfläche (36H) des Wärmespeichertanks (32) auf einem zweiten Niveau, wo der Wärmespeicherwärmetauscher (34) vorgesehen ist.

2. Wärmespeichertank (32) nach Anspruch 1, wobei der Deckel (48) auf den nach oben offenen Tankkörper (46) geschraubt ist.

3. Wärmespeichertank (32) nach einem der Ansprüche 1 bis 2, wobei der Wärmespeicherwärmetauscher (34) aus einem schlangenlinienförmig gebogenen Kupferrohr gefertigt ist und in dem nach oben offenen Tankkörper (46) untergebracht ist.

4. Wärmespeichertank (32) nach Anspruch 3, wobei der Wärmespeicherwärmetauscher (34) gegenüberliegende Enden aufweist, die sich vom Deckel (48) nach oben erstrecken.

5. Wärmespeichertank (32) nach Anspruch 4, wobei ein erstes Ende der gegenüberliegenden Enden des Wärmespeicherwärmetauschers (34) zur Verbindung mit einem sechsten Kältemittelrohr (38) einer Klimaanlage ausgebildet ist und ein zweites Ende der gegenüberliegenden Enden des Wärmespeicherwärmetauschers (34) zur Verbindung mit einem siebten Kältemittelrohr (40) der Klimaanlage ausgebildet ist.

6. Klimaanlage enthaltend einen Verdichter (6) und einen Wärmespeichertank (32) nach einem der Ansprüche 1 bis 5, wobei der Verdichter (6) in einem Aussparungsabschnitt des Wärmespeichertanks (32) angeordnet ist.

## Revendications

1. Réservoir de stockage de chaleur (32) conçu pour pouvoir être disposé autour d'un compresseur (6) comprenant :
un corps de réservoir ouvert vers le haut (46) constitué d'une résine et présentant une paroi latérale (46a) et une paroi inférieure, une partie de la paroi latérale (46a) conçue pour faire face au compresseur (6) étant une paroi latérale de transfert de chaleur (46aa) présentant une surface impliquée dans le transfert de chaleur,
un couvercle (48) constitué d'une résine pour fermer une ouverture supérieure du corps de réservoir ouvert vers le haut (46),
une garniture interposée entre le corps de réservoir ouvert vers le haut (46) et le couvercle (48),
un matériau de stockage de chaleur (36) injecté dans un espace interne du corps de réservoir ouvert vers le haut (46) entouré par la paroi latérale (46a) et un élément de contact (52), de telle sorte que l'élément de contact (52) est inséré entre une surface externe du compresseur (6) et la paroi latérale de transfert de chaleur (46aa) et
un échangeur thermique de stockage de chaleur (34),
**caractérisée en ce que** le réservoir de stockage de chaleur (32) présente une partie inférieure (36B) en contact avec le matériau de stockage de chaleur (36), la partie inférieure (36B) présentant une aire transversale horizontale inférieure à celle du réservoir de stockage de chaleur (32) à proximité d'une surface de liquide (36T) du matériau de stockage de chaleur (36), au moins une partie du réservoir de stockage de chaleur (32) à un premier niveau où l'échangeur thermique de stockage de chaleur (34) n'est pas présent présentant une aire transversale horizontale (36N) inférieure à une aire transversale horizontale (36H) du réservoir de stockage de chaleur (32) à un deuxième niveau où l'échangeur thermique de stockage de chaleur (34) est présent.

2. Réservoir de stockage de chaleur (32) selon la revendication 1, dans lequel le couvercle (48) est vissé sur le corps de réservoir ouvert vers le haut (46).

3. Réservoir de stockage de chaleur (32) selon l'une quelconque des revendications 1 à 2, dans lequel l'échangeur thermique de stockage de chaleur (34) est constitué d'un tuyau de cuivre courbé en une configuration en serpentin et logé à l'intérieur du corps de réservoir ouvert vers le haut (46).

4. Réservoir de stockage de chaleur (32) selon la revendication 3, dans lequel l'échangeur thermique de stockage de chaleur (34) présente des extrémités opposées s'étendant vers le haut à partir du couvercle (48).

5. Réservoir de stockage de chaleur (32) selon la revendication 4, dans lequel une première extrémité des extrémités opposées de l'échangeur thermique de stockage de chaleur (34) est conçue pour être reliée à un sixième tuyau de fluide frigorigène (38) d'un climatiseur et une deuxième extrémité des extrémités opposées de l'échangeur thermique de stockage de chaleur (34) est conçue pour être reliée à un septième tuyau de fluide frigorigène (40) du climatiseur.

6. Climatiseur comprenant un compresseur (6) et un réservoir de stockage de chaleur (32) selon l'une quelconque des revendications 1 à 5, dans lequel le compresseur (6) est disposé dans une partie évidée du réservoir de stockage de chaleur (32).
